# EUROPEAN PATENT APPLICATION

(11) **EP 2 354 818 A1**
(43) Date of publication of application: **10.08.2011**
(21) Application number: 10153004.6
(22) Date of filing: 09.02.2010
(51) Int. Cl.: G02B 6/00

(54) **Elongated lighting device and method of making same**

(71) Applicant: 3M Innovative Properties Company, Saint Paul, MN 55133-3427 (US)
(72) Inventor: Cura, Elisabeth, 41453, Neuss (DE)
(74) Representative: Voortmans, Gilbert J.L.

(57) **Abstract**

An elongated lighting device and method of making the same are provided. The elongated lighting device includes two polymeric lighting elements (210A,210B) that each include light extractors (230A,230B) along at least one side edge. The lighting elements are made from the same optically transparent polymeric material and are molded using curable polymer systems. Two or more lighting elements are joined using an optical adhesive (240) that includes the same material from which the lighting elements are made.

## Description

### Field

This disclosure relates to elongated lighting devices that emit light along their length.

### Background

Light guides are increasingly being used for decorative and functional lighting purposes in various locations, some of which require the light guide to emit light selectively (e.g., comparatively uniformly or in a particular direction) along its length. Such light guides are referred to hereinafter as side-light guides. Various mechanisms are known for enabling light that is injected into a guide from a light source at one end to be extracted selectively from the guide along its length to provide, effectively, a linear lighting device. It is recognized that the use of side-light guides in linear lighting devices offers certain advantages: these include, for example, the possibility of using a low voltage light source such as an LED light source, and of separating the light source from the area in which the lighting device is actually located.

One form of side-light guide has light-extraction elements spaced along its length to cause light that is being propagated along the guide from at least one end thereof to be emitted selectively through a light-emitting region in the wall of the guide. In that case, the light-extraction elements comprise notches in the light guide, each notch having at least one reflecting surface of optical quality i.e., a surface that diffusely scatters only a small amount (generally less than 20%) of the light incident upon it. Other light guides are known that have two sets of notches centered along different longitudinal axes in order to control the lateral distribution of light emitted by the guide. Generally, these types of side-light guides offer the advantage that they can be designed to emit light very efficiently along their length and in a preferred direction with a pre-selected distribution, making them suitable for use in lighting devices in a wide number of applications. Other forms of side-light guides can include a core surrounded by cladding, in which the inner surface of the cladding is formed with indentations that cause light to be extracted from the light guide. A light-reflecting member may be provided around a portion of the light guide to redirect some of the extracted light in a particular direction.

Side-light guides are available in both flexible and rigid forms, and in materials that will not break or shatter and have a comparatively long useful life. They are also capable of providing a high level of illumination in an energy-efficient manner. Lighting devices incorporating side-light guides have already been used in various locations. They can, for example, be used as cost effective, safe, versatile alternatives to fluorescent tubes in commercial, architectural, and consumer lighting applications but can also be used in situations in which fluorescent tubes are impractical and/or to achieve effects that cannot be obtained using conventional lighting devices. For example, there is increasing interest in the use of side-light guides in lighting devices in vehicles and it has already been proposed to use such devices on the outside of a vehicle, to outline features such as the rear window or the trunk. More recently, manufacturers have become interested in using side-light guides in lighting devices in car interiors for both practical and aesthetic reasons.

### Summary

Typically, articles, such as lighting devices, that include microstructured features, such as light extractors, can be produced by using a mold into which fluid polymer or prepolymer components can be shaped and hardened. However, it is difficult to make molded articles that have a high aspect ratios and complicated geometries, such as elongated lighting devices, since they can break, or significantly deform when removed from the mold. There is a limit of about 1 meter for the length of such microreplicated lighting devices. In automobile lighting applications, frequently the light source can be more than 1 meter from the location where illumination is desired. There is a need for a method of economically manufacturing elongated lighting devices such as those discussed herein. There is also a need for joining, connecting, or merging two or more lighting devices while maintaining mechanical and optical integrity of the resultant elongated device.

In one aspect, a method of making an elongated lighting device is provided that includes providing a first polymeric, optically transparent, lighting element and a second optically transparent, polymeric lighting element both made of the same polymeric material and each element having a first end and a second end; aligning the first polymeric lighting element so that at least one end of the first polymeric lighting element is in optical communication with at least one end of the second polymeric lighting element; applying an optical adhesive between at least one end of the first polymeric lighting element and at least one end of the second polymeric lighting element so that there is no air in the adhesive between the two lighting elements; and hardening the adhesive to form an elongated lighting device, wherein the optical adhesive comprises the same polymeric material as each of the polymeric lighting elements. The provided method may also further comprise aligning the two or more polymeric lighting elements using a rail guide. It can also decrease the hardening time of the optical adhesive if the lighting elements are heated to a temperature of 85°C for at least 10 minutes before joining the lighting elements together.

In another aspect, an elongated lighting device is provided that includes a first polymeric, optically transparent lighting element having two ends comprising a polymeric material, a second polymeric optically transparent lighting element having two ends and comprising the same polymeric material, and an optical adhesive contacting at least end of the first polymeric optically transparent lighting element and one end of the second polymeric, optically transparent lighting element, wherein the optical adhesive, when hardened comprises the same polymeric material as the polymeric lighting elements.

In yet another aspect, a device is provided that includes a first polymeric, optically transparent lighting element having two ends and comprising a polymeric material; a second polymeric optically transparent lighting element having two ends and comprising the same polymeric material as the first lighting element; at least one guide rail; and an optical adhesive contacting at least one end of the first polymeric optically transparent lighting element and one end of the second polymeric, optically transparent lighting element, wherein the optical adhesive, when hardened, comprises the same polymeric material as the polymeric lighting elements, and wherein the first polymeric optically transparent lighting element and the second polymeric optically transparent lighting element are held in alignment by the rail guide. The device can also include a light source, such as a laser or light-emitting diode, which can inject light into one end of the first polymeric optically transparent lighting element.

In this disclosure:
"light guide" refers to an article that receives light at an one end and propagates the light to the other end or to a light extractor without significant loss;
"light extractor" refers to an element on the surface of a light guide placed there by design to direct or extract light out of the light guide;
"optical communication" refers to the transfer of light energy from one lighting element to another lighting element;
"optically transparent" refers to a material that is a substantial transmitter of light having wavelengths in at least a portion of the visible or infrared spectrum;
"hardened" refers either to a curing process by which a liquid composition, that includes for example a monomer, polymer precursors, or mixtures, thereof, is solidified or to a process that allows a fluid heated thermoplastic material to cool and solidify;
"polyurethane" refers to a polymer that is a reaction product of a multifunctional isocyanate and a polyol and may contain other components; and
"rail guides" refers to supporting structures that can hold a lighting element in place during bonding.

The provided method and article produced thereby provides molded articles that have a high aspect ratios and complicated geometries, such as elongated lighting devices. The provided devices can have a length exceeding 1 meter for the length and can be useful inn automobile lighting applications where the light source can be more than 1 meter from the location where illumination is desired. The provided method is also useful for economically manufacturing elongated lighting devices such as those discussed herein. Using the provided method, devices can be that have mechanical and optical integrity in the resultant elongated device.
Following is a list of embodiments according to the invention:
1. A method of making an elongated lighting device comprising;
   providing a first polymeric, optically transparent, lighting element and a second optically transparent, polymeric lighting element both made of the same polymeric material and each element having two ends;
   aligning the first polymeric lighting element so that one end of the first polymeric lighting element is in optical communication with one end of the second polymeric lighting element;
   applying an optical adhesive between one end of the first polymeric lighting element and one end of the second polymeric lighting element so that there is no air in the adhesive between the two lighting elements; and
   hardening the adhesive to form an elongated lighting device,
   wherein the optical adhesive, when hardened, comprises the same polymeric material as each of the polymeric lighting elements.
2. A method of making an elongated lighting device according to embodiment 1, wherein one end of the first polymeric lighting element is substantially collinear with one end of the second polymeric lighting element.
3. A method of making an elongated lighting device according to embodiment 1, wherein the polymeric material is a polyurethane, a poly(methyl methacrylate), a polycarbonate, or a combination thereof.
4. A method of making an elongated lighting device according to embodiment 3, wherein the polymeric material comprises an optically clear polyurethane.
5. A method of making an elongated lighting device according to embodiment 4, wherein the polyurethane is the product of the reaction of an isocyanate and a polyol compound.
6. A method of making an elongated lighting device according to embodiment 1, wherein the first lighting element, the second lighting element, or both comprises one or more side light extractors.
7. A method of making an elongated lighting device according to embodiment 6, wherein the side light extractors comprise a notch in a side of the lighting element.
8. A method of making an elongated lighting device according to embodiment 1, wherein the first polymeric lighting element and the second polymeric lighting element are aligned using a rail guide.
9. A method of making an elongated lighting device according to embodiment 1, further comprising heating the first and the second lighting element before applying the optically clear adhesive.
10. A method of making an elongated device according to embodiment 9, wherein the first and the second lighting element are heated to at least 85°C for at least ten minutes.
11. A method of making an elongated lighting device according to embodiment 1, wherein the hardening is done at 95°C for at least 3 minutes.
12. A method for making an elongated lighting device according to embodiment 1, wherein the elongated lighting device has a tensile strength of greater than 3.5 N/mm² when tested at a speed of 600 mm/min at room temperature.
13. An elongated lighting device comprising:
   a first polymeric, optically transparent lighting element having two ends and comprising a polymeric material;
   a second polymeric optically transparent lighting element having two ends and comprising the same polymeric material as the first lighting element, and
   an optical adhesive contacting at least one surface of the first polymeric optically transparent lighting element and one surface of the second polymeric, optically transparent lighting element,
   wherein the optical adhesive, when hardened, comprises the same polymeric material as the polymeric lighting elements.
14. An elongated lighting device according to embodiment 13, wherein at least one of the lighting elements comprises a cut away region.
15. An elongated lighting device according to embodiment 13, wherein the first lighting element and the second lighting element have substantially the same cross-sectional area.
16. An elongated lighting device according to embodiment 13, wherein the first lighting element and the second lighting element have substantially the same cross-sectional shape.
17. An elongated lighting device according to embodiment 13, wherein one end of the first polymeric lighting element is substantially collinear with one end of the second polymeric lighting element.
18. An elongated lighting device according to embodiment 13, wherein the polymeric material is a polyurethane, a poly(methyl methacrylate), a polycarbonate, or a combination thereof.
19. An elongated lighting device according to embodiment 18, wherein the polymeric material comprises an optically clear polyurethane.
20. An elongated lighting device according to embodiment 19, wherein the polyurethane is the product of the reaction of an isocyanate and a polyol compound.
21. An elongated lighting device according to embodiment 13, wherein the first lighting element, the second lighting element, or both comprises one or more side light extractors.
22. An elongated lighting device according to embodiment 21, wherein the side light extractors comprise a notch in a side of the lighting element.
23. A device comprising:
   a first polymeric, optically transparent lighting element having two ends and comprising a polymeric material;
   a second polymeric optically transparent lighting element having two ends and comprising the same polymeric material as the first lighting element;
   at least one guide rail; and
   an optical adhesive contacting at least one end of the first polymeric optically transparent lighting element and one end of the second polymeric, optically transparent lighting element,
   wherein the optical adhesive, when hardened, comprises the same polymeric material as the polymeric lighting elements, and
   wherein the first polymeric optically transparent lighting element and the second polymeric optically transparent lighting element are held in alignment by the rail guide.
24. A device according to embodiment 23 further comprising:
   at least one light source that injects light into one end of the first polymeric optically transparent lighting element.

### Brief Description of the Drawings

Figs. 1a-1d are transverse cross-sections of lighting elements useful in the provided methods and devices.
Fig. 2 is a schematic drawing of a provided elongated lighting device.
Figs. 3a-2c are schematic diagrams that illustrate steps in the process of making a provided elongated lighting device.

### Detailed Description

In the following description, reference is made to the accompanying set of drawings that form a part of the description hereof and in which are shown by way of illustration several specific embodiments. It is to be understood that other embodiments are contemplated and may be made without departing from the scope or spirit of the present invention. The following detailed description, therefore, is not to be taken in a limiting sense.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

An elongated, polymeric lighting device is provided that can be useful for providing a high level of illumination in an energy-efficient manner. The provided lighting device can incorporate side-light guides and can be used in various applications as cost effective, safe, versatile alternatives to fluorescent bulbs in commercial, architectural, and consumer lighting applications. Polymeric lighting devices that have side-light guides are well known and are described, for example, in PCT Pat. Publ. Nos. WO 00/25159 (Kengo et al.), and WO 01/51851 (Lundin) as well in PCT App. No. US2009/050447, filed July 14, 2009. The polymeric lighting devices can be flexible or rigid.

The polymeric lighting devices can be made from joining two or more lighting elements that are made of the same material with an optical adhesive also made of the same material as the lighting elements. The lighting elements can have substantially the same cross-sectional areas, substantially the same cross-sectional shapes, or both.

Alternatively the lighting elements may have different cross-sectional areas and/or shapes. The cross-sectional shape can be substantially circular or can have any other shape known in the art of light guides. For example, European Patent Application, EP09174908.5, filed November 3, 2009, discloses side light guides that have in one aspect a side-light guide having a naked core of transparent polymeric material without a cladding. The side-light guide has a first surface defining a light emitting surface extending longitudinally along the side-light guide and a second surface having light-extraction elements extending longitudinally along the side-light guide and the second surface is arranged generally opposite to the first surface, the side-light guide has a generally circular cross-section comprising cut away regions at opposing sides defining on each opposite side at least one planar surface tapering inwardly from the first towards the second surface.

The term 'cut away region' is intended to describe a region that is absent from what would otherwise be a complete circular cross-section. Hence, the term is not intended to mean that the actual region is cut away. While the region could be shaped by cutting away from a cylindrical light guide, the shape of the light guide including the shape of the cross-section with the cut away regions is typically obtained through molding as described furtheron. In one particular embodiment, the side-light guide has cut away regions at opposing sides defining on each opposite side a planar surface tapering inwardly substantially from the first to the second surface. The cross-section of such a side-light guide hence has a shape substantially resembling that of a pear. A side-light guide with a cross-sectional shape resembling that of a pear has been found to be particularly useful where the support of the light device comprises a housing enclosing the side-light guide and defining an opening for passage of light.

In addition to the inwardly tapering planar surfaces on opposite sides of the side-light guide in the cut away regions, further planar surfaces may be provided as desired. For example, in one particular embodiment, the cut away regions at opposing sides defines on each opposite side a further planar surface tapering inwardly from the second surface to the first surface and connecting to the planar surface extending inwardly from the first towards the second surface thereby defining a generally V-shaped cut away region at each opposite side. The shape of a side-light guide with generally V-shaped cut away regions at each opposite side may be particularly useful where the support of the light device comprises a multiplicity of discrete points of physical engagement between a support and the side-light guide and whereby each of the points are linked or connected to one another along the length of the side-light guide. The points of physical engagement and shape of the cut away regions of the side-light guide can be designed to engage as male-female assuring a reliable retention of the side-light guide in the support.

The side-light guide may have further cut away regions. For example a small cut away region at opposite ends at the first surface may be provided and/or further cut away regions may be provided at opposite ends near the second surface. Generally, the cut away region(s) are identical at the opposite sides, that is, they are the mirror image of each other.

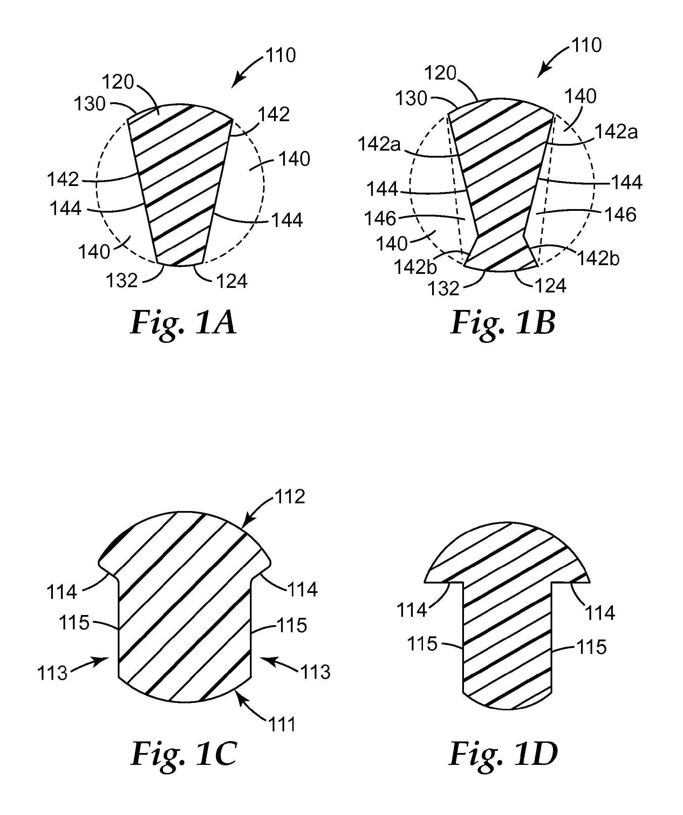

Various cross-sectional shapes of typical lighting elements are illustrated, for example, in Figs. 1a-1d. Fig. 1a is a cross-sectional view of a first embodiment of the side-light guide 110. Side-light guide 110, which generally has a circular cross-section, comprises core 120 formed of a polymeric material having a refractive index larger than that of air. Side-light guide 110 further comprises first surface defining a light emitting surface 130 and second surface 124 being arranged opposite thereto and having light extraction elements. Side-light guide 110 comprises cut away regions 140. Cut away regions 140 provide for sides 142 opposite to each other and each having planar surface 144. Planar surfaces 144 are arranged with an angle with respect to each other and define a planar surface tapering inwardly from first surface 130 towards second surface 124. Such a shape helps to facilitate light bundling and concentration of the light emitted by light emitting surface 130 in that light beams which are being extracted by light extracting elements 132 will generally hit sides 142 under a more obtuse angle. Thereby, light beams will be reflected on the inside of sides 142 and will be directed towards light emitting surface 130 rather than being emitted at sides 142. Thus, light beams are being concentrated towards light emitting surface 130. Furthermore, planar surface 144 tapering inwardly helps to facilitate keeping side-light guide 110 in position within the support of the light device, for example within a housing or the like.

Fig. 1b shows a second embodiment of side-light guide 110. The difference to the embodiment as shown in Fig. 1a is that cut away regions 140 define a generally v-shaped cut away region at opposite sides of side-light guide 110. The V-shaped cut away region is defined by planar surface 142a tapering inwardly from light emitting surface or first surface 130 to second surface 124 and second planar surface 142b tapering inwardly from second surface 124 to first surface 130 and intersecting with planar surface 142a.

Another embodiment of a lighting element is illustrated in Fig. 1c wherein the generally-cylindrical lighting element is cut away on opposed sides, as indicated at 113 in Fig. 1c, to form location features in the periphery of the guide between the region 111 containing the notches and light-emitting region 112. Two cut-away regions 113 are identical and each forms two planar surfaces 114, 115 on the exterior of the modified light guide. Surfaces 114 extend inwardly from light-emitting region 112 of the light guide and, as described below, function as contact surfaces. Surfaces 115 extend, parallel to each other, from the inner edges of contact surfaces 114 to the notch containing region 111 of the light guide and function as guiding surfaces.

Another embodiment of the cross-sectional shape of a lighting element is shown in Fig. 1d. In this embodiment, the orientation of planar surfaces 114 now lie at right angles to respective guide surfaces 115 on the light guide.

The provided light devices can be a molded article as disclosed, for example, in U. S. Pat. No. 6,077,462 (Lundin et al.) using a one-piece expandable mold thereby producing molded articles having microstructured surfaces and having no molding seams. The apparatus for producing the light devices includes an expandable one-piece mold having a generally hollow portion of flexible material. The hollow flexible portion of the mold includes an inner surface and an outer surface. The inner surface is characterized by a plurality of microstructured features and is accessible through an opening in the outer surface of the hollow flexible mold. The apparatus also includes a means for expanding the flexible mold.

U. S. Pat. No. 6,077,462 (Lundin et al.) also discloses a process for making a one-piece expandable mold for seamless microreplication. The process begins with providing a stock material which can be machined to form a mold master. During machining of the mold master, a plurality of microstructured features can be imparted into the surface of the mold master. The mold master can then be covered with a curable material that, when cured, forms an expandable mold. Also, during the curing process when the material is hardened, the material can be imparted with a replica of the plurality of microstructured features from the mold master so that the inner surface of the mold contains the microstructured features. Finally, the expandable mold can be separated from the mold master by expanding the mold relative to the mold master and removing the master from the mold. The one-piece mold can have an inner surface characterized by a plurality of microstructured features. The one-piece mold can then be filled with a fluid material which can be hardened to form a molded article. The step of hardening the material can substantially replicate the microstructured features of the inner surface of the mold into the surface of the molded article. Once formed and hardened, the molded article may be removed from the mold by elastically expanding the mold. The step of elastically expanding the mold can take place by injecting a fluid under pressure between the mold and the molded article.

The material used for the mold can be flexible when cured so that the mold is elastically expandable. Suitable curable materials include elastomers. Typically, the curable material for the mold is a silicone elastomer, for its elastic and release properties.

The next step is to fill the inside of the mold with a mold-filling material. Typically, the mold-filling is in liquid form when introduced into the mold so that the material can flow around the microstructured features inside the mold. The mold-filling can be any material that can be introduced into the mold and hardened at temperature and/or pressure conditions that do not adversely affect the mold. The mold-filling can be thermosetting so that it cures, upon exposure to heat, moisture, light, or another catalyst, or the material can be thermoplastic and be fluid when heated but solid upon cooling. Typically, the mold-filling material comprises a polymerizable compound or mixture. The mold-filling material can be cured by heat, radiation, or other known processes.

The mold-filling material can, typically, be chosen to be a type of material that does not significantly shrink upon hardening. If the mold-filling material tends to contract upon hardening, it may potentially pull away from the microstructured features in the mold while hardening. This "pulling away" may result in poor replication of the microstructures from the mold into the finished article. If a mold-filling material that tends to contract significantly upon hardening is chosen, however, accurate and precise microreplication can still be obtained. For example, if the mold-filling material is of a type that contracts upon curing, the operator can inject more mold-filling material into the mold under pressure. The amount of material and pressure used will preferably cause expansion of the mold by the same amount that the curable material is expected to contract upon hardening. In this manner, when the mold-filling material is hardened, the mold relaxes into its original position as the mold-filling material contracts to counteract the effects of pulling away during hardening.

After the mold-filling material is hardened inside the mold to form a finished article (lighting device) the finished article cay be removed from mold. The expandable mold can be expanded by any method of elastic expansion as discussed previously. The plurality of microstructured features on the finished article substantially replicate the plurality of microstructured features of the inner surface of mold. The method of mold microreplication presented herein can be particularly useful for imparting microstructures on articles without directly machining the microstructures into the articles.
As an illustrative example, the method of seamless microreplication of the present invention may be used to make an illumination device comprising a fiber core having a plurality of light extraction structures extending into the core. A typical illumination device includes a light guide. A light guide may be likened to a length of conventional optical fiber. Such a fiber generally has a core fiber with a particular cross-sectional geometry (i.e., circular, elliptical, etc.) and a cladding around the core. The refractive index of the core is greater than the refractive index of the cladding. The cladding may include a protective layer of material, or, in its simplest form, may even be ambient air. In use, a beam of electromagnetic energy, such as visible light, introduced into the core at one end of the fiber will always strike the core/cladding interface at an angle greater than the critical angle and so will be totally internally reflected. As a result, the light will be transmitted to the other end of the fiber without significant losses. In one particular embodiment, the side-light guide including light extraction elements such as notches, may be molded in a mold comprising two parts that can be separated from each other wherein one of the parts of the mold includes structure to form the light extraction elements. The advantage of the use of a two part mold is that complex shapes of the side-light guide can be readily obtained including for example side-light guide that have generally V-shaped cut away regions. The mold can be made of flexible materials or rigid materials such as, for example, metals.

An illumination device also includes structures on or in the core that cause the light traveling through the core to be transmitted outside of the fiber in controlled areas and at controlled intensities. Such structures are called extraction structures. U.S. Pat. No. 5,432,876 (Appeldorn et al.) discloses illumination devices having extraction structures directly on or in the fiber core; and U.S. Pat. No. 5,631,994 (Appleldorn et al.) discloses extraction structures formed on external overlays that may be attached to light guides to form illumination devices.

When molding an illumination device, the material used to make the finished light guide can harden into a substantially optically transparent material. As a general class of hardenable materials, acrylates are preferred for their transparency properties. However, for many applications, a more flexible finished article is desired. In such cases, aliphatic urethanes may preferably be employed. Urethanes are also desirable because their contraction during hardening tends to be minimal, although the transparency properties of certain formulations may be less that desired.

When making an illumination device according to the present invention, typical hardenable polymeric materials include polyurethanes comprising the polymerization reaction product of one or more polyisocyanates with one or more polyols. Typically, polyurethanes useful in the present invention are thermoplastics and thermosets, and are substantially optically transparent and/or capable of transmitting visible light.

Typical polyurethanes comprise flexible or rigid, thermoplastic or thermoset aliphatic polyurethanes. Useful aliphatic polyurethanes can be formed from reactions of polyester polyols with polyisocyanates and, optionally, chain extenders. The mole ratio of polyol: polyisocyanate: chain extender can be from about 1:1:0 to about 1:15:14. The preferred polyurethanes useful in the invention can exhibit excellent stability under prolonged exposure to light, particularly ultraviolet light. Typically, aliphatic polyurethanes useful in the invention can comprise:
a) soft segments comprising isocyanate-terminated polyester polyol molecules having molecular weights of about 200 to 15,000;
b) optionally, hard segments comprising predominantly the reaction product of a chain extender with the isocyanate end-groups of the soft segments and additional polyisocyanate; and
c) sufficient aliphatic polyisocyanate to react with essentially all of the polyester polyol and chain extender molecules present.

The incorporation of hard segments in the formulation is optional. Hard segments may improve the strength and may increasing the refractive index of the polyurethane waveguide, as needed, provided that they do not adversely affect the light transmissive properties of the waveguide of the invention.

In addition to the urethane linkage, optionally there may be various amounts of other linkages such as isocyanurates, biurets, allophonates, amides, or oxazolidones present in the waveguide. In these instances, additional polyisocyanate beyond the amount previously described can be required, but the additional linkages cannot be present to such an extent that they would cause phase separation resulting in light scattering, thereby reducing the effectiveness of the waveguide. In addition, plasticizers such as dibutyl adipate, catalysts such as dibutyltin dilaurate, and other additives such as stabilizers and antioxidants may be added in amounts necessary to assure satisfactory product performance. Aliphatic polyurethanes can be blended with other optically clear polymers, provided that the blend is compatible, or that the domains formed are small and do not scatter light which would reduce the effectiveness of the resulting waveguide.

Typical polyols include glycols predominantly derivable from branched C₃-C₆ alkylene oxides, although some units derived from ethylene oxide may be included, providing the essential effect of branched units on the character of the pre-and final polymers is retained and phase crystallization does not occur. The amount of ethylene oxide units is preferably less than about 20 weight percent of the total amount of alkylene oxide units. More preferred are glycols predominantly derivable from propylene oxide and/or butylene oxide, including, for example, poly(oxypropyleneoxyethylene) glycol, (commercially available under the trade designation VORANO 5287 and sold by Dow Chemical Company, Midland, MI) with a molecular weight of about 2000, and poly(oxybutyleneoxyethylene) glycol.

Additional higher molecular weight polyols include the polyethylene and polypropylene oxide polymers in the molecular weight range of from about 200 to about 20,000 such as the series of poly(ethylene oxide) compounds available from Union Carbide Corp., Danbury, CT and sold under the trade designations CARBOWA 400, 600, 800, 1000, 3350, 8000 and 20000; the polyether polyols available from Hercules Chemical Specialties Co., Wilmington, DE under the trade designation STRUCTON HPOR 0100 NCB; and poly(tetramethylene ether) glycols in the molecular weight range of from about 200 to about 4000, such as the series of polyols available from DuPont Co., Wilmington, DE and sold under the trade designations TERETHANE 1000 and 2000.

Polyols that are particularly useful in preparing optical elements for the provided lighting devices include polyester polyols. Examples of useful polyester polyols include polycaprolactone polyols in the molecular weight range of from about 200 to about 5000, such as the series of polyols sold under the trade designations TONE 200, 210, 230, 240, 260, 301, 305, and 310 as available from Union Carbide; hydroxy-terminated polybutadiene materials, such as the series of polyols sold under the POLY BD trade designation as available from Elf Atochem, Philadelphia, PA; hydrogenated polybutadiene polyols, such as those sold under the trade designations POLYTAIL H and POLYTAIL HA by Mitsubishi Gas Chemical America Inc., New York, NY; aliphatic block copolymer polyols, such as poly(ethylene-butylene) diols as sold by Shell Chemical Co., Houston, TX under the trade designation KRATON HPVM 2201; polyglycol esters of dibasic acids such as adipic acid, azeleic acid, sebacic acid and the like, such as the family sold under the DESMOPHEN trade designation by Bayer, Pittsburgh, PA, as DESMOPHEN 670-80, 670-100, 800, and 1100, and the family sold under the trade designation CAPA, available from Pertorp, Houston, TX, as CAPA 200 and 301; polyethylene terephthalate polyols, such as that sold by Cook Chemical Co., San Clemente, CA under the trade designation CHARDANOL; acrylic polyols, such as the series sold by S. C. Johnson & Sons, Inc., Racine, WI under the JONCRYL trade designation; carboxy-functional polyester polyols, such as those sold by Inolex Chemical Co., Philadelphia, PA under the trade designation LEXOREX 1405; polycarbonate polyols, such as sold under the trade designation PERMANO by Permuthane Coatings Div., Stahl USA, Peabody, MA; and random copolymers of poly(tetramethylene oxide)/polycarbonate, such as the series of polyols available from BASF Corporation, Mount Olive, NJ and sold under the trade designation POLYTHF CD™_{.}

Useful diisocyanates are free of aromatic moieties and comprise only aliphatic and/or cycloaliphatic moieties. Typical diisocyanates include polymethylene diisocyanates such as 1,6-hexamethylene diisocyanate and 1,12-dodecane diisocyanate, methylene bis(4-isocyanatocyclohexane), 1,3- and 1,4-bis(isocyanatomethyl)cyclohexane, cyclohexane-1,4-diisocyanate, cyclohexane-1,3-diisocyanate, 2,2,4-trimethylhexamethylene diisocyanate, cyclobutane-1,3-diisocyanate, isophorone diisocyanate (1-isocyanato-3,3,5-trimethyl-5-isocyanato)cyclohexane, IPDI), 2,4- and 2,6-hexahydrotolylene diisocyanate, perhydo-2,4'- and -4,4'-diphenylmethane diisocyanate (H₁₂MDI, available under the trade designation DESMODUR W from Bayer Corp., Pittsburgh, PA), polyisocyanates containing isocyanurate groups, such as the isocyanurate of 1,6-hexamethylene diisocyanate (trade designation DESMODUR N-3300, N-3600, and N-3800 available from Bayer Corp.), hexahydro-1,3- and -1,4-phenylene diisocyanate, mixtures of 2,2,4- and 2,4,4-trimethyl hexamethylene diisocyanate (TMDI), di(isocyanatoethyl)carbonate, lysine diisocyanate, 1,6-diisocyanato-2,2,4,4-tetramethyl hexane, 1,8-diisocyanato-*p*-menthane, and isopropylidine bis(4-isocyanatocyclohexane), including mixtures of isomers of the above diisocyanates, oligomers of the above diisocyanates, and any combinations of the above diisocyanates and oligomers thereof.

Chain extenders can include aliphatic C₂-C₄ straight chain and branched chain diols, diamines, and hydroxy amines; hydrazine and piperazine, cyclo- and cycloaliphatic diols, diamines or hydroxy amines having up to 12 carbon atoms, hydroquinone and resorcinol (as such or as the bis(2-hydroxyethyl)ethers), and aromatic and heteroaromatic nuclei (and their fully-hydrogenated counterparts) substituted with two groups that are methylol and/or aminomethyl. Other chain extenders include aliphatic C₂-C₄ straight and branched chain diols and cycloalkyl diols, such as ethylene glycol, 1,2- and 1,3-propylene glycol, 1,4- and 2,3-butylene glycol, 1,5-pentanediol, 1,6-hexanediol, 1,8-octanediol, neopentyl glycol, 1,4-cyclohexane dimethanol, 1,4-cyclohexanediol, trimethylolpropane, 1,4-bis(hydroxymethyl cyclohexane), 2-methyl-1,3-propanediol, glycerol, trimethylolpropane, 1,2,6-hexanetriol, trimethylolethane, pentaerythritol, quinitol, mannitol, sorbitol, diethylene glycol, triethylene glycol, tetraethylene glycol, higher polyethylene glycols, dipropylene glycol, higher polypropylene glycols, dibutylene glycol, higher polybutylene glycols, 4,4'-dihydroxy diphenyl propane and dihydroxy methyl hydroquinone. Other suitable types of chain extenders include fluorine-substituted difunctional diols such as 1,2,2,3,4,4-hexafluoropentane-1,5-diol and phenyl-substituted C₂-C₅ diols such as 2-phenyl-1,3-propylene glycol and phenyl-1,4-butylene glycol. Of course, mixtures and combinations of the above diols can be used as chain extenders.

The mole ratio of polyol: polyisocyanate: chain extender is preferably in the range of from about 1:1:0 to about 1:15:14, more preferably from about 1:1:0 to about 1:6:5. Aliphatic polyurethanes useful in the invention can be prepared by first reacting the polyol and diisocyanate to form a prepolymer which can be an oligomer, then reacting the prepolymer or oligomers with the chain extender, in a two-step process. The polyurethane may also be prepared by first blending the polyol and chain extender followed by addition of diisocyanate, in a one-pot method. The polyurethane can be a thermoplastic material having a weight-average molecular weight preferably in the range of from about 60,000 to about 200,000 or it can be a thermoset material, i.e., crosslinked. Other materials useful for the provided lighting devices include thermoplastic materials such as poly(methyl methacrylate) or polycarbonate.

Using the above-described method, lighting devices having diameters of from 5 millimeters and up to 15 millimeters and up to 1 meter in length can be fabricated and easily removed from the mold. However, it is difficult to remove lighting devices having longer dimensions or greater aspect ratios from even flexible molds without breaking the devices or distorting the microreplications thereon. However, there is a need for lighting devices that are longer, for example, in automotive vehicle applications in order to allow illumination distant from the source light or light-emitting diode. In some embodiments, lighting devices that include side-guides are desirable that are up to 1.2 meters in length, up to 1.5 meters in length, up to 2.0 meters in length, or even longer.

The provided elongated lighting devices are made by splicing two or more polymeric lighting elements together so that the extraction of light is not disturbed. For example, after splicing two elements together each element has the same distribution of the intensity of the extracted light, the same color of light is extracted along the length of the lighting device and there are minimal "hot spots" or areas with intense light extraction. Additionally, the elongated lighting devices maintain the mechanical performance, such as, for example, flexibility and tensile strength, of each individual lighting element. Finally, the elongated lighting devices are constructed so that the aging of the bonding line (the material between the two lighting elements) is the same as the two lighting elements. The technical solution to make the elongated lighting devices is to use the same material that was used to mold each lighting device as the bonding material that is used to join them together. Thus, the joining of two lighting elements using the same material creates an elongated lighting device that meets the above properties. In one embodiment, the bonding material can be the same polyurethane that is described above and was used to make the individual molded elements. Surprisingly, the polyurethane molding materials have good adhesion with high mechanical strength when used to bond two (or more) lighting elements to form an elongated lighting device.

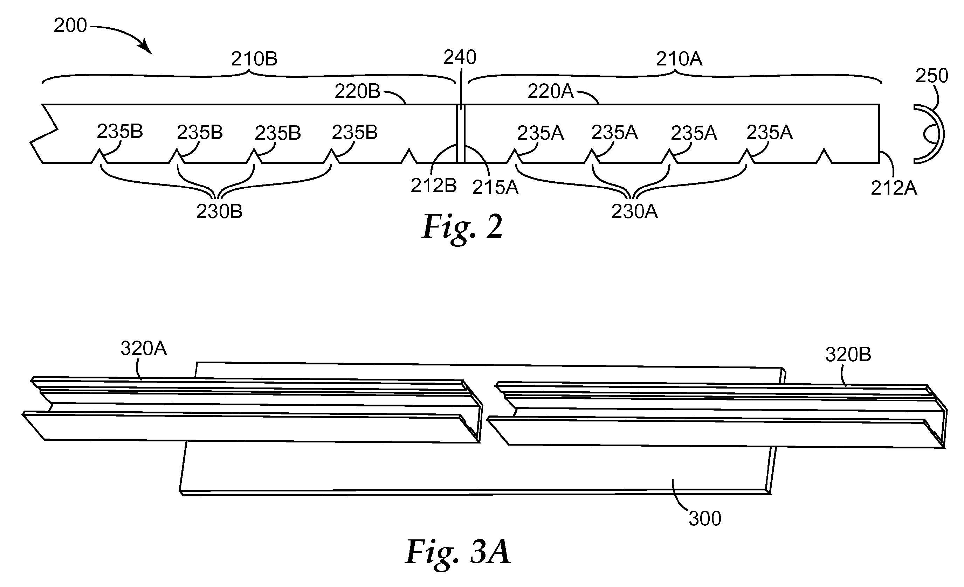

Fig. 2 shows, diagrammatically, a provided elongated lighting device. The guide 200, which is generally cylindrical with a circular cross-section, is made up of two polymeric lighting elements 210A and 210B. First polymeric lighting element 210A includes solid core 220A formed from a suitable light transmitting material as described above. It may, optionally, be surrounded by a cladding material (not shown) having a lower refractive index than the core material. Light injected by light source 250 into first polymeric lighting element 210A at end 212A can propagate along the guide within core 220A by total internal reflection at the interface of core 220A and air or cladding material, if present. Polymer lighting element 210A is provided, along its length and on one side (as shown) with spaced light-extraction elements in the form of notches (such as that denoted by 230A) that extend into core 220A. Notches 230A include optically-smooth reflecting surfaces 235A that are designed to cause light which is incident on one of these surfaces while propagating along guide core 220A to be diverted selectively out of the first polymeric lighting element by reflection. Second polymeric lighting element 210B is shown coaxially aligned with first polymeric lighting element 210A and has solid core 220B that has, spaced along its length, a series of light-extracting elements in the form of notches 230B that form reflecting surfaces 235B that are designed to cause light which is incident on one of these surfaces while propagating along guide core 220B to be diverted selectively out of the second lighting extraction element by reflection. First polymeric lighting element 210A and second polymeric lighting element 210B are joined together using optical adhesive 240 which is the same material from which both polymeric lighting elements 210A and 210B have been molded.

First polymeric lighting element 210A and second polymeric lighting element 210B can be aligned before applying optical adhesive 240 so that end 215A of the first polymeric lighting element and end 212B of the second polymeric lighting are in optical communication with one another. In Fig. 2, 215A points to the end of first polymeric lighting element 210A and 212B points to the end of second polymeric lighting element 210B. In Fig. 2 both lighting elements are aligned collinearly. However, it is contemplated that there are many other geometrical arrangements between first polymeric lighting element 210A and second polymeric lighting element 210B that would be possible and still allow them to be in optical communication with each other after being joined by optical adhesive 240. For example, they could be at perpendicular or oblique angles to each other and still be in optical communication with each other though the optical adhesive. It is also contemplated that other elements such as cut surfaces on the ends of the lighting elements can be produced to allow light to flow from one element to the other element through the optical adhesive with a minimum of light loss.

A method of making an elongated lighting device is illustrated by the embodiment illustrated in the sequence of drawings Figs. 3A-3C. Fig. 3A shows two rail guides 320A and 320B mounted on substrate 300. Substrate 300 is any rigid substrate such as a thick piece of metal or a thick polymer. Rail guides 320A and 320B can be attached to substrate 300 by any adhesion means known to those of ordinary skill in the art such as, for example, bolts, rivets, adhesives, hook and loop, or other mechanical or chemical fasteners. Rail guides 320A can be any three dimensional guide that can hold polymeric lighting elements in place during bonding. Exemplary devices that are useful as rails in the provided method include supports such as those disclosed in PCT App. No. 2009/050447 (Rudek et al.), filed July 14, 2009.

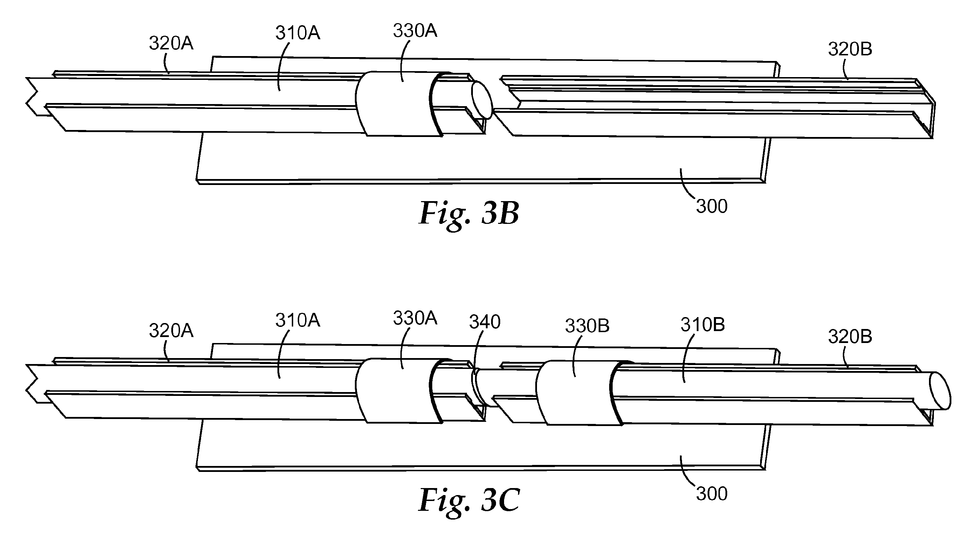

Fig. 3B illustrates how first polymeric lighting element 310A mounted on substrate 300 can be held in place in rail guide 320A using fastener 330A. Fastener 330A can be any strap or tape that can secure first polymeric lighting element 310A in place for bonding. For example, pressure-sensitive adhesive tapes can be used for securing the polymeric lighting element in place. Fig. 3C shows the process of aligning first polymeric lighting element 320A which is held in rail guide 320A by fastener 330A with second polymeric lighting element 310B which is held in light guide 320B using fastener 330B. Rail guides 320A and 320B are held in place by attachment to substrate 300. When properly aligned (in this example, collinearly), optical adhesive 340 can be applied to one end each of first polymeric lighting element 310A and second polymeric lighting element 310B. When the lighting elements are aligned and optical adhesive has been applied the optical adhesive can be cured or hardened by exposure to energy in the form of UV radiation (if a UV-curable adhesive) or heat (if a thermoset adhesive). It is also possible to use a two part reactive adhesive that will cure when left at room temperature for a period of time. If heat is needed to cure the adhesive, then the whole mounting device shown in Fig. 3C with aligned lighting elements and optical adhesive can be placed in an oven for enough time to completely cure the adhesive. In some embodiments the first and the second polymeric lighting elements can be cured when held at 85°C for at least ten minutes. In other embodiments, the curing can be accomplished by holding the lighting elements with optical adhesive at 95°C for at least 10 minutes.

Objects and advantages of this invention are further illustrated by the following examples, but the particular materials and amounts thereof recited in these examples, as well as other conditions and details, should not be construed to unduly limit this invention.

### Examples

Elongated flexible polymeric lighting elements with side-notches having dimensions 7 mm in diameter and 12.5 cm in length were molded as describe above from a reactive polyurethane that is described in Table 1 of U. S. Pat. No. 6,623,667 (Lundin). Two lighting elements were bonded together using the method described in Figs 3A-2C above.

### Comparative Example 1- Instant Adhesive

The lighting elements were bonded with 3 µL of EC-5 Rite-Lok Cyanoacrylate (available from 3M, St. Paul, MN). The elements were allowed to contact each other with manual pressure for 30 seconds.

### Comparative Example 2 - UV Adhesive

The lighting elements were bonded with 4 µL of UV-50 Rite-Lok (available from 3M, St. Paul, MN). The elements were assembled as shown in Figs 3A-2C and were exposed to ultraviolet light for 30 seconds.

### Example 1 - Reactive Polyurethane

The lighting elements were bonded with 3 µL of the same reactive polyurethane described above for the molded lighting elements. The elements were assembled and were held for 24 hours at room temperature until fully cured. Alternatively, the light elements could be held assembled and exposed to 95°C for 3 minutes

### Tensile Strength of Bonded Lighting Elements

The tensile strength of Example 1 was compared to the tensile strength of one of the component optical lighting elements with no bond on a Zwick Tensile Tester 970 at a speed of 600 mm/min. The samples tested were 3 cm in length. The cross sectional area of the samples was 32.5 mm². The data recorded for Example 1 was from a 3 cm piece of the bonded lighting device containing a bond. The data is shown in Table 1 below and is an average of 5 tests.

**Table 1**

| Force and Tensile Strength of Bonded Lighting Device vs. Unbonded Lighting Element | | | |
|---|---|---|---|
| Force Unbonded Device (N) | Tensile Strength Unbonded Device (N/mm²) | Force Example 1 (N) | Tensile Strength Example 1 (N/mm²) |
| 222.36 | 6.76 | 141.80 | 4.31 |

### Comparison of Force and Tensile Strength Different Bonding Materials

The samples above were subjected to force and tensile testing to test the strength of the bonding line using a Zwick Tensile Tester 970 at a speed of 500 mm/min. The results are tabulated in Table 2 and the tensile force to break is recorded in Newtons. The value shown is the average of three tests.

**Table 2**

| Force [N] and Tensile Strength (N/mm²) of Elongated Polymeric Lighting Devices | | | |
|---|---|---|---|
| | Comparative Example 1 | Comparative Example 2 | Example 1 |
| Force [N] | 34 | 97 | 123 |
| Tensile strength [N/mm²] | 1,05 | 2,99 | 3,78 |

Table 2 shows that Example 1, using the same polyurethane as was used to mold the two lighting elements, gives the strongest bond.

### Example 2

Two plates of poly(methyl methacrylate) (PMMA, available as PLEXIGLAS from Evonik Industries, Essen, Germany) were cut to dimensions of 70 mm x 25 mm x 2 mm. One end of one of the plates was butted together with one end of the other plate (end-to-end). The same poly(methyl methacrylate) was dissolved in a minimum amount of dichloromethane and applied to the end of one of the plates. After 5 seconds both plates were pressed together. The bonded section had dimensions of 50 mm x 2 mm. The bonding tensile strength was measured as described above. The results are shown in Table 3.

**Table 3**

| Tensile Strength of Bonded PMMA | |
|---|---|
| Force Example 3 (N) | Tensile Strength Example 3 (N/mm²) |
| 661.33 | 6.61 |

Various modifications and alterations to this invention will become apparent to those skilled in the art without departing from the scope and spirit of this invention. It should be understood that this invention is not intended to be unduly limited by the illustrative embodiments and examples set forth herein and that such examples and embodiments are presented by way of example only with the scope of the invention intended to be limited only by the claims set forth herein as follows. All references cited in this disclosure are herein incorporated by reference in their entirety.

## Claims

1. A method of making an elongated lighting device comprising;
providing a first polymeric, optically transparent, lighting element and a second optically transparent, polymeric lighting element both made of the same polymeric material and each element having two ends;
aligning the first polymeric lighting element so that one end of the first polymeric lighting element is in optical communication with one end of the second polymeric lighting element;
applying an optical adhesive between one end of the first polymeric lighting element and one end of the second polymeric lighting element so that there is no air in the adhesive between the two lighting elements; and
hardening the adhesive to form an elongated lighting device,
wherein the optical adhesive, when hardened, comprises the same polymeric material as each of the polymeric lighting elements.

2. A method of making an elongated lighting device according to claim 1, wherein one end of the first polymeric lighting element is substantially collinear with one end of the second polymeric lighting element.

3. A method of making an elongated lighting device according to claim 1, wherein the polymeric material is a polyurethane, a poly(methyl methacrylate), a polycarbonate, or a combination thereof.

4. A method of making an elongated lighting device according to claim 3, wherein the polymeric material comprises an optically clear polyurethane.

5. A method of making an elongated lighting device according to claim 4, wherein the polyurethane is the product of the reaction of an isocyanate and a polyol compound.

6. A method of making an elongated lighting device according to claim 1, wherein the first lighting element, the second lighting element, or both comprises one or more side light extractors.

7. A method of making an elongated lighting device according to claim 6, wherein the side light extractors comprise a notch in a side of the lighting element.

8. A method of making an elongated lighting device according to claim 1, wherein the first polymeric lighting element and the second polymeric lighting element are aligned using a rail guide.

9. A method of making an elongated lighting device according to claim 1, further comprising heating the first and the second lighting element before applying the optically clear adhesive.

10. A method of making an elongated device according to claim 9, wherein the first and the second lighting element are heated to at least 85°C for at least ten minutes.

11. A method of making an elongated lighting device according to claim 1, wherein the hardening is done at 95°C for at least 3 minutes.

12. A method for making an elongated lighting device according to claim 1, wherein the elongated lighting device has a tensile strength of greater than 3.5 N/mm² when tested at a speed of 600 mm/min at room temperature.

13. An elongated lighting device comprising:
a first polymeric, optically transparent lighting element having two ends and comprising a polymeric material;
a second polymeric optically transparent lighting element having two ends and comprising the same polymeric material as the first lighting element, and
an optical adhesive contacting at least one surface of the first polymeric optically transparent lighting element and one surface of the second polymeric, optically transparent lighting element,
wherein the optical adhesive, when hardened, comprises the same polymeric material as the polymeric lighting elements.

14. An elongated lighting device according to claim 13, wherein at least one of the lighting elements comprises a cut away region.

15. An elongated lighting device according to claim 13, wherein the first lighting element and the second lighting element have substantially the same cross-sectional area.
